# FASCICULE DE BREVET EUROPEEN

(11) **EP 0 333 600 B1**
(45) Date de publication et mention de la délivrance du brevet: **12.05.1993**
(21) Numéro de dépôt: 89420042.7
(22) Date de dépôt: 13.02.1989
(51) Int. Cl.: B22F 7/08, H01H 11/04

(54) **Procédé de fabrication d'une pièce composite, par exemple pour contacts électriques**
Verfahren zur Herstellung eines Verbundkörpers,z.b.für elektrische Kontakte
Process for producing a composite work piece, for instance for electric contacts

(30) Priorité: 25.02.1988 FR 8802443; 06.07.1988 FR 8809277
(43) Date de publication de la demande: 20.09.1989
(73) Titulaire: MERLIN GERIN, F-38240 Meylan (FR)
(72) Inventeur: Février, Georges, F-38050 Grenoble Cédex (FR); Vanin, Jacques, F-38050 Grenoble Cédex (FR); Favre-Tissot, Jean-Paul, F-38050 Grenoble Cédex (FR)
(74) Mandataire: Ritzenthaler, Jacques

(56) Documents cités:
- FR-A- 2 347 800
- GB-A- 593 171
- GB-A- 2 022 142
- US-A- 2 545 352

## Description

L'invention est relative à un procédé de fabrication d'une pièce composite constituée d'une pastille en matériau obtenu par agglomération de poudre principalement métallique, rendue solidaire mécaniquement et électriquement d'un support.

Le choix des matériaux et de la surface d'un contact électrique, notamment d'un contact d'appareil de coupure dépend de nombreux facteurs, en particulier de la résistivité du matériau de contact, de la résistance mécanique et de la résistance à l'action de l'arc. Une pièce de contact du genre mentionné, constituée par un support et une pastille de contact permet de tenir compte de ces impératifs. La pastille, par exemple en alliage d'argent ou de cuivre, est généralement fabriquée séparément, par exemple par frittage, et fixée ou rapportée sur le support en cuivre, après avoir été décarburée, lorsqu'elle comporte du graphite.

La présente invention a pour but de simplifier ce procédé de fabrication tout en améliorant la qualité des pièces de contact fabriquées et ce but est atteint par les caractéristiques de la revendication 1.

L'opération de fixation provoque simultanément la conformation de la forme de la pastille par le même outil en obtenant ainsi un gain notable de temps et une amélioration de la fixation.

Le document US-A-2.545.352 décrit un procédé de fabrication en chaîne de contacts électriques,comprenant un poste de formation d'alvéoles, un poste de remplissage des alvéoles par le matériau de contact, un four de frittage et un poste d'estampage. L'installation est compliquée et n'assure pas une conformation de la pastille lors du frittage.
Le document GB-A-2.022.142 concerne un procédé de réalisation de contacts électriques à l'aide d'une presse à souder par résistance. Un masque est placé sur le support et ce masque comporte des orifices qui forment chacun un moule pour le matériau qui après frittage constitue le contact électrique. Le masque doit par la suite être enlevé.

Selon un mode de mise en oeuvre de l'invention, la forme de la cavité créée dans le support, est conjuguée de celle d'un bloc fritté qui y est introduit. Le support avec le bloc fritté est mis en place sur une machine à souder réalisant la fixation du bloc sur le support. La configuration de l'électrode de la machine à souder appliquée sur le bloc, détermine la forme de la pastille de contact en saillie du support au cours de l'opération de fixation. La saillie de la pastille frittée peut résulter d'une déformation du support, notamment du refoulement du bossage conjugué de la cavité. Cette déformation du support est réalisée au cours de l'opération de fixation, en utilisant une électrode appropriée pouvant simplement refouler le bossage, ou même créer un repoussement vers l'intérieur du côté opposé à la pastille. L'opération est réalisée sous pression, appliquée par les électrodes de la machine souder, cette pression étant avantageusement comprise entre 5 et 20 Kg/mm2, (1 Kg/mm2 = 98,1 bars), pour des pastilles à base d'argent. Après application de la pression, on fait passer un courant électrique par les électrodes et l'ensemble support, bloc à fritté 12 pour réaliser un échauffement provoquant l'opération de fixation. La température peut être comprise entre 700 et 900° maintenue pendant une durée d'une ou de plusieurs secondes, suffisantes à l'opération.

Le matériau de la pastille peut être un métal pur mais est généralement un pseudo-alliage à base d'argent, notamment argent graphite, argent oxyde métallique, argent tungstène ou argent nickel. Pour certaines applications particulières, ce matériau peut être à base de cuivre, notamment cuivre tungstène ou cuivre tellure. Le support est généralement du cuivre ou un alliage de cuivre, mais l'invention est applicable à d'autres matériaux. Le procédé peut être facilement automatisé et certaines opérations peuvent être réalisées simultanément, notamment l'estampage du support et la formation de la cavité.

Selon un autre mode de mise en oeuvre, la cavité est remplie de poudre, éventuellement précomprimée et/ou agglomérée et le frittage et la fixation sur le support sont réalisés simultanément sur la machine à souder.

Le contact électrique réalisé par le procédé selon l'invention est notamment utilisable dans l'appareillage électrique, notamment des disjoncteurs basse tension.

D'autres avantages et caractéristiques ressortiront plus clairement de la description qui va suivre, d'un mode de mise en oeuvre de l'invention donné à titre d'exemple non limitatif et représenté aux dessins annexés dans lesquels :
- la figure 1 est une vue schématique en perspective du support de contact selon l'invention ;
- la figure 2 illustre la phase de poinçonnage du support selon la figure 1 pour former la cavité de réception du bloc fritté ;
- les figures 3 et 4 illustrent les phases d'introduction d'un bloc fritté dans la cavité ;
- la figure 5 montre en perspective la machine à fixer et à déformer le support;
- la figure 6 est une vue à échelle agrandie montrant le support et le bloc en cours de fixation ;
- la figure 7 est une vue en perspective de la pièce de contact à l'état terminé.
- la figure 8 est une coupe longitudinale de la pièce selon la figure 7.

Sur les figures, une pièce de contact 10, par exemple un contact d'un appareil de coupure de courant basse tension, est découpée dans une bande de cuivre ou en tout autre matériau conducteur de l'électricité, suivant un contour prédéterminé, par exemple parallélépipèdique-rectangle. Dans l'exemple illustré par les figures, l'épaisseur de la plaque de cuivre est voisine de 2mm, et la largeur voisine de 12mm, mais il est clair que l'invention est applicable à des contacts de dimensions différentes adaptées aux caractéristiques des appareils comprenant ce contact. La pièce de contact 10 est introduite entre un poinçon 12 et une matrice 14 d'une presse, susceptible de déformer la pièce 10 pour créer à l'emplacement prévu pour la pastille de contact, notamment sur la grande face latérale supérieure 16 de la pièce, une cavité 18 et sur la face opposée 20, un bossage 22. Dans l'exemple présenté, le poinçon 12 présente un téton 24 de forme conjuguée à celle de la cavité 18, ce téton 24 refoulant le matériau pour faire apparaître sur la face opposée le bossage 22. Le téton est par exemple de forme cylindrique, tandis que la matrice 14 est évidée en son centre 26 pour autoriser la formation du bossage 22. Il est clair que cette opération de préformation peut être réalisée sur la même machine que celle assurant le découpage ou l'estampage de la pièce de contact 10.

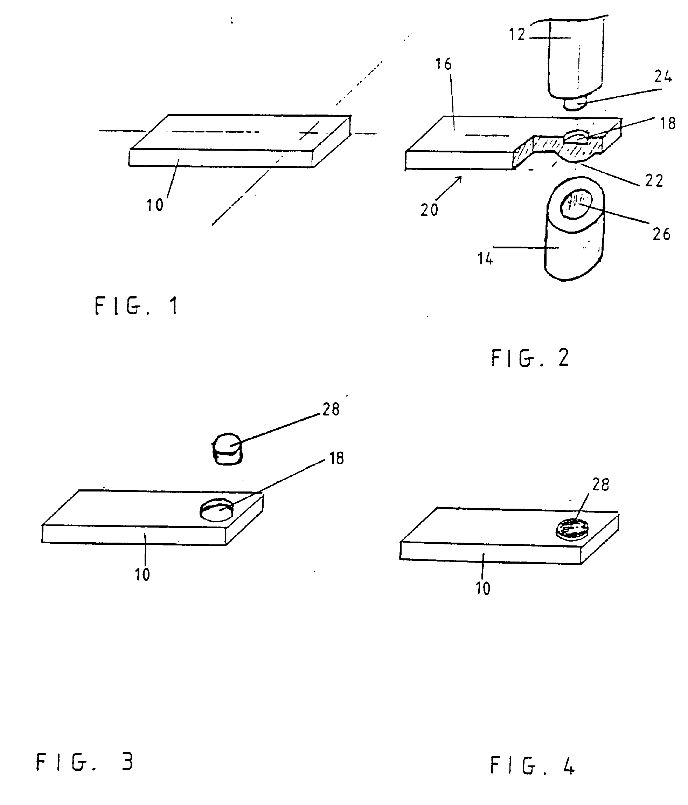

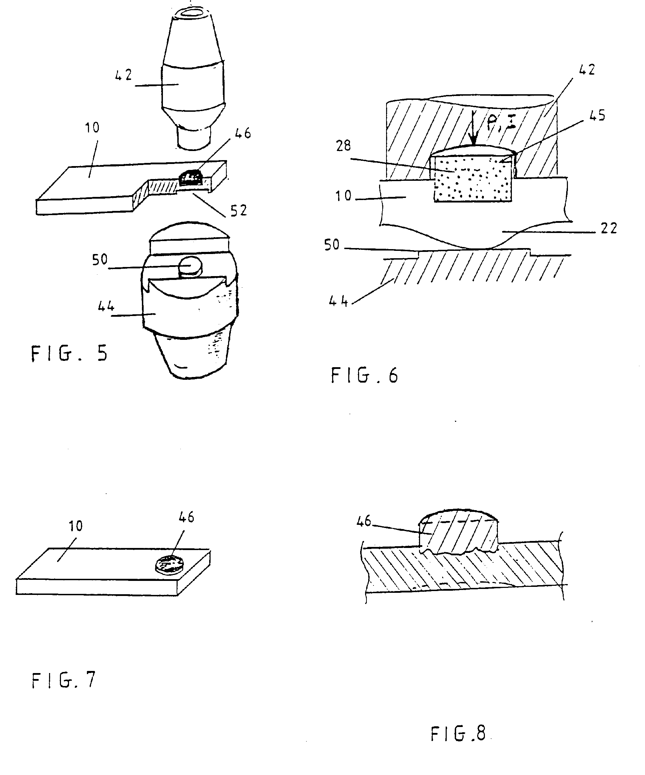

L'opération suivante consiste à introduire un bloc fritté 28 dans la cavité 18 de la manière représentée aux figures 3 et 4. Le bloc 28 est réalisé de la manière usuelle par frittage d'une poudre par exemple d'argent graphite, d'argent nickel, d'argent tungstène ou d'argent oxyde métallique sur une machine séparée. Le bloc 28 peut avoir la forme finale de la pastille de contact ou approximativement cette forme ou inversement subir une déformation lors de l'opération de fixation. Le bloc 28 peut ou ne peut pas être décarburé. Dans l'exemple illustré, la cavité 18 est entièrement remplie par le bloc fritté et ce dernier forme une saillie ou protubérance. Le bloc peut également affleurer la face supérieure 16 de la pièce 10 ou même être en léger retrait lorsque la cavité 18 n'est pas entièrement remplie. Cette pièce 10 avec la cavité 18 remplie par le bloc 28 est ensuite placée sur une machine à souder dont seules les deux électrodes supérieure 42 et inférieure 44 sont représentées. La machine à souder est d'un type relativement courant susceptible d'appliquer une pression sur les pièces traîtées tout en appliquant un courant électrique assurant l'échauffement des pièces. L'électrode supérieure 42 présente une empreinte 45 de forme conjuguée à celle voulue pour la pastille 46 obtenue par conformation du bloc 28, tandis que l'électrode inférieure 44 présente par exemple un téton 50 en faible saillie, susceptible d'assurer le refoulement du bossage 22. On voit sur la figure 5, qui représente la pièce 10 après fixation, que le téton 50 provoque non seulement le refoulement du bossage 22, mais un enfoncement 52 favorisant la compression du bloc 28 et la venue en saillie pour former la pastille 46 de la pièce 10. Dans une des applications de l'invention, prise uniquement à titre d'illustration concrète, les électrodes 42,44 sont en tungstène et la pression est comprise entre 5 et 20 Kg/mm2 (1 Kg/mm2 = 98,1 bars) selon les caractéristiques de la pièce de contact 10. L'intensité du courant doit provoquer un échauffement compris entre 700 et 900°, cette intensité étant par exemple voisine de 18 kilo-ampères dans le cas d'une pièce de contact ayant une épaisseur voisine de 2mm, telle que décrite ci-dessus. La durée de passage du courant, qui correspond à l'opération, est de l'ordre de la seconde, et en tous les cas extrèmement rapide. Lorsque le volume du bloc fritté introduit dans la cavité 18 est suffisant pour créer une protubérance, il n'est pas indispensable de refouler le bossage 22, et l'électrode inférieure 44 est dans ce cas dépourvue de téton 50. Cette opération de refoulement est néanmoins indispensable lorsque la cavité n'est que partiellement ou entièrement remplie par le bloc fritté. La qualité de la fixation mécanique et électrique de la pastille 46 sur la pièce ou support 10 est excellente. A titre d'exemple, on peut préciser que la pastille 46 est en saillie d'une hauteur voisine de un millimètre tout en pénétrant dans le support 10 sur une hauteur quasi-équivalente. La largeur du support 10 est de plusieurs millimètres, par exemple de 7 millimètres, d'autres valeurs étant bien entendu admises. Le procédé préférentiel selon l'invention fait usage du refoulement du bossage 22 pour assurer une compression et une venue en saillie suffisante de la pastille 46, mais l'invention n'est pas limitée à ce procédé particulier.

Les presses et machines à souder sont des machines standards bien connues des spécialistes, et les différentes opérations ne nécessitent aucune précaution particulière. La pièce de contact 10 peut être un contact fixe ou un contact mobile d'un appareil de coupure basse tension, notamment d'un disjoncteur, mais le procédé est applicable à tout autre type de contact électrique, notamment d'un contacteur ou interrupteur.

Selon une variante de réalisation, le bloc 28, introduit dans la cavité 18, est un bloc de poudre, pouvant être aggloméré ou précomprimé. Le bloc 28 peut également être constitué sur place par introduction et précompression de poudre dans la cavité 18. La pièce 10 avec le bloc 28 est ensuite placée sur la machine à souder de la manière décrite ci-dessus. L'opération de frittage de la poudre et l'opération de fixation sont concomitantes. Toutes les particularités précitées sont bien entendu applicables à ce procédé.

Selon une autre variante, le bloc de poudre est comprimé par un piston incorporé à l'électrode supérieure 42 pour réaliser l'opération de frittage et/ou de fixation lors du chauffage.

## Revendications

1. Procédé de fabrication d'une pièce composite de contact, constituée d'un support (10) et d'une pastille (46) en matériau obtenu par agglomération de poudre principalement métallique, rendue solidaire mécaniquement et électriquement dudit support (10) comprenant les phases suivantes:
- préparation d'un bloc de poudre précomprimée, agglomérée ou frittée dudit matériau,
- préformage du support (10) pour faire apparaître à l'emplacement voulu pour la pastille (46) une cavité (18),
- pose du bloc dans la cavité (18),
- pose du support (10) sur une machine à souder par résistance de façon que la cavité (18) est en face d'une électrode (42) présentant une autre cavité (45) et que les deux cavités forment une enceinte pratiquement étanche contenant ledit bloc, lorsque l'électrode est appliquée sur le support,
- application d'un courant électrique d'intensité adéquate pour chauffer le matériau,
- et compression du bloc de poudre par réduction de la cavité (18) du support pour conformer et/ou fritter le bloc et le solidariser au support.

2. Procédé selon la revendication 1, caractérisé en ce que le volume de ladite cavité (18) est réduit par déformation du support (10) sous l'effort de compression exercé par les électrodes de la machine à souder.

3. Procédé selon la revendication 1 ou 2, caractérisé en ce que le support (10) est préformé pour faire apparaître sur la face opposée de la cavité (18) un bossage (22) refoulé au cours de l'opération de chauffage et de compression.

4. Procédé selon la revendication 3, caractérisé en ce que la face de l'électrode (48) appliquée sur le support (10) du côté du bossage (22) présente un téton (50) en saillie pour repousser le bossage (22) à l'intérieur du support avec formation d'un faible creux (52).

5. Procédé selon la revendication 1,2,3 ou 4, caractérisé en ce que la pastille est un alliage à base d'argent.

6. Procédé selon la revendication 1,2,3 ou 4, caractérisé en ce que la pastille est un alliage à base de cuivre.

7. Procédé selon la revendication 5, caractérisé en ce que ladite pastille est un alliage argent graphite n'ayant pas été décarburé avant sa fixation audit support.

8. Procédé selon l'une quelconque des revendications précédentes, caractérisé en ce que la pression appliquée est comprise entre 5 et 20 Kg/mm2 (1 Kg/mm2 = 98,1 bars) et la température entre 700 et 900°.

## Patentansprüche

1. Verfahren zur Herstellung eines Verbund-Kontaktstücks, bestehend aus einem Träger (10) und einem Plättchen (46), das durch Agglomeration eines Pulvers, hauptsächlich eines Metallpulvers hergestellt wird, und sowohl mechanisch als auch elektrisch mit dem genannten Träger (10) verbunden ist, wobei das Verfahren folgende Arbeitsschritte umfaßt:
- Vorbereitung eines Blocks aus vorverdichtetem, agglomeriertem oder gesintertem Pulver des genannten Materials,
- Vorformung des Trägers (10) zur Erzeugung einer Vertiefung (18) an der für die Aufnahme des Kontaktplättchens (46) vorgesehenen Stelle,
- Einsetzen des Blocks in die Vertiefung (18),
- Einsetzen des Trägers (10) in einen Widerstandsschweißautomaten, derart daß die Vertiefung (18) gegenüber einer Elektrode (42) mit einer weiteren Vertiefung (45) angeordnet wird und die beiden Hohlräume praktisch eine dicht abgeschlossene Hülle um den genannten Block herum bilden, wenn die Elektrode auf den Träger aufgebracht wird,
- Zuführung eines geeigneten Stroms zur Erwärmung des Werkstoffs
- und Verdichtung des Pulverblocks durch Verringerung des Volumens der im Träger ausgebildeten Vertiefung (18) zur Umformung und/oder Sinterung des Blocks sowie seiner Befestigung auf dem Träger.

2. Verfahren nach Anspruch 1, dadurch gekennzeichnet, daß das Volumen der genannten Vertiefung durch Umformung des Trägers (10) mittels des durch die Elektroden des Schweißautomaten ausgeübten Kompressionsdrucks verringert wird.

3. Verfahren nach Anspruch 1 oder 2, dadurch gekennzeichnet, daß der Träger (10) so vorgeformt ist, daß er auf der gegenüberliegenden Seite der Vertiefung (18) eine Auswölbung (22) aufweist, die während der Erwärmung und Verdichtung zurückgestaucht wird.

4. Verfahren nach Anspruch 3, dadurch gekennzeichnet, daß die auf die Auswölbung (22) des Trägers (10) wirkende Seite der Elektrode (48) einen hervorstehenden Ansatz (50) aufweist, um die Auswölbung (22) unter Ausbildung einer kleinen Mulde (52) in den Träger hineinzudrücken.

5. Verfahren nach Anspruch 1, 2, 3 oder 4, dadurch gekennzeichnet, daß das Kontaktplättchen aus einer Silberlegierung besteht.

6. Verfahren nach Anspruch 1, 2, 3 oder 4, dadurch gekennzeichnet, daß das Kontaktplättchen aus einer Kupferlegierung besteht.

7. Verfahren nach Anspruch 5, dadurch gekennzeichnet, daß das genannte Kontaktplättchen aus einer Silber-Graphit-Legierung besteht und vor der Befestigung auf dem Träger nicht entkohlt wurde.

8. Verfahren nach einem der vorhergehenden Ansprüche, dadurch gekennzeichnet, daß der aufgebrachte Druck zwischen 5 und 20 kg/mm² (1 kg/mm² = 98,1 bar) und die Temperatur zwischen 700 und 900° C liegen.

## Claims

1. A manufacturing process of a composite contact part constituted by a support (10) and a pad (46) made of a material obtained by agglomeration of mainly metallic powder, rendered mechanically and electrically secure to said support (10), comprising the following phases :
- preparation of a block of precompressed, agglomerated or sintered powder of said material,
- pre-shaping of the support (10) to form a cavity (18) at the desired location for the pad (46),
- placing the block in the cavity (18),
- placing the support (10) on a resistance welding machine so that the cavity (18) is facing an electrode (42) presenting another cavity (45) and the two cavities form a practically tight enclosure containing said block, when the electrode is applied to the support,
- application of an electrical current of suitable intensity to heat the material,
- and compression of the block of powder by reduction of the cavity (18) of the support to shape and/or sinter the block and secure it firmly to the support.

2. The process according to claim 1, characterized in that the volume of said cavity (18) is reduced by deformation of the support (10) under the compression force exerted by the welding machine electrodes.

3. The process according to claim 1 or 2, characterized in that the support (10) is pre-shaped to form on the opposite face of the cavity (18) a boss (22) pushed back in the course of the heating and compression operation.

4. The process according to claim 3, characterized in that the face of the electrode (48) applied to the support (10) on the boss (22) side has a protruding pin (50) to push the boss (22) into the support with a slight hollow (52) being formed.

5. The process according to claim 1, 2, 3 or 4, characterized in that the pad is a silver-based alloy.

6. The process according to claim 1, 2, 3 or 4, characterized in that the pad is a copper-based alloy.

7. The process according to claim 5, characterized in that said pad is a graphite silver alloy having not been decarburized before being fixed to said support.

8. The process according to any one of the above claims, characterized in that the pressure applied is comprised between 5 and 20 Kg/sq.mm (1 Kg/sq.mm = 98.1 bars) and the temperature is between 700 and 900°C.
